# EUROPEAN PATENT APPLICATION

(11) **EP 2 735 770 A1**
(43) Date of publication of application: **28.05.2014**
(21) Application number: 12814710.5
(22) Date of filing: 19.07.2012
(51) Int. Cl.: F16H 25/24, F16H 25/22

(54) **SEAL FOR ROLLING SCREW AND ROLLING SCREW**

(30) Priority: 20.07.2011 JP 2011159033
(71) Applicant: NSK Ltd., Tokyo 141-8560 (JP)
(72) Inventor: OKA, Keitaro, Fujisawa-shi Kanagawa 252-0811 (JP)
(74) Representative: Klingseisen, Franz
(86) International application number: PCT/JP2012/004608
(87) International publication number: WO 2013/011694

(57) **Abstract**

A seal for a rolling screw capable of preventing an unintended contact with the threaded shaft, while maintaining advantages of a lip tilting perpendicularly to the axial direction, and the rolling screw using the seal are provided. In the seal for the rolling screw including: a circular ring part (16) secured to a nut of the rolling screw; and a lip part (17) in sliding contact with a threaded shaft (1a) of the rolling screw, the lip part (17) extends inward in the radial direction from the circular ring part (16) at a tilt angle with respect to a surface perpendicular to an axial direction of the threaded shaft, and bends in a direction to make the tilt angle smaller at a partway of the lip part.

## Description

### Technical Field

The present invention relates to a seal for a rolling screw to hermetically seal a peripheral surface of a threaded shaft in the rolling screw such as a ball screw, a roller screw, or the like, and a rolling screw provided with the seal.

### Background Art

The seal for the rolling screw to hermetically seal a space between a nut and a threaded shaft is used in the rolling screw such as the ball screw, the roller screw, or the like. Its purpose is to protect the threaded shaft and the threaded groove of the nut from the entrance of dusts or the like, and in addition, to hold and hermetically seal the lubricant grease or the like supplied inside the nut.

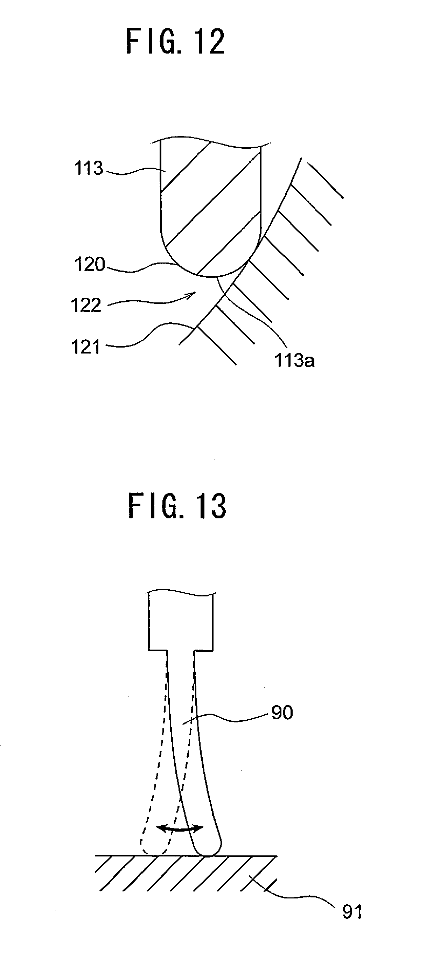

Such a seal for the rolling screw is provided at both ends in the axial direction of the nut, and the lip edge comes into sliding contact with the inside of the threaded groove of the threaded shaft. In this configuration, when the lip part of the seal is made to extend inward in the radial direction perpendicular to the axial direction, the lip part. 90 behaves as illustrated in FIG. 13. That is, in conjunction with the relative movement of the nut and the threaded shaft, frictions generated between the edge of the lip part 90 and the surface of a threaded shaft 91 exert a force onto the edge of the lip part 90 in the direction of the movement of the threaded shaft. Then, the lip part 90 will deflect. The deflecting direction of the lip part 90 is the direction in which the sealing target such as foreign matters presses up the lip part 90 to easily pass by the seal. For this reason, in such a sealing structure, a high sealing performance is not obtainable in any axial directions.

Hence, the lip part is made to tilt with respect to a surface perpendicular to the axial direction in the conventional seal for the rolling screw (for example, see Patent Document 1).

### Prior Art Document

### Patent Document

Patent Document 1: JP 2008-1339344 A

### Summary of the Invention

### Problem to be Solved

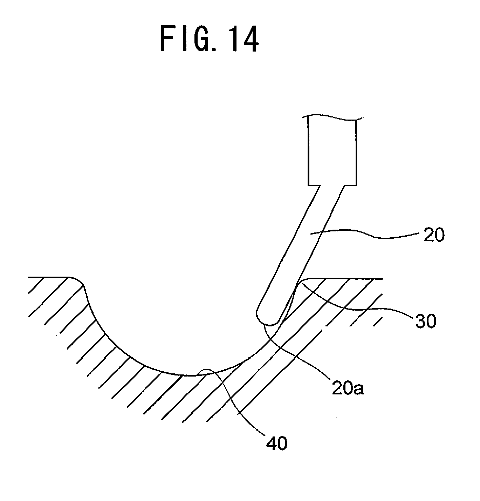

It is to be noted, however, that when the lip part of the seal is made to tilt with respect to the surface perpendicular to the axial direction as described in Patent Document 1, there is a problem that the side face of the lip part 20 comes intro contact with a land end part 30 in a groove part 40 of the threaded shaft, as illustrated in FIG. 14. Once this occurs, the lip part 20 will tilt more with the contact part being as a supporting point. A phenomenon occurs such that a lip edge 20a is separated from the surface of the groove part 40. In this case, since the edge 20a of the lip part 20 is separated from the groove part 40, the sealing performance degrades and the passage of the sealing target (for example, a foreign matter) becomes easy. This will adversely affect the performances of the rolling screw, that is operating performance degradation, life shortening, or the like.

In consideration of the above problem, it is an object of the present invention to provide the seal for the rolling screw capable of presenting an unintended contact with the threaded shaft, while maintaining advantages of the lip tilting with respect to the face perpendicular to the axial direction of the threaded shaft, and the rolling screw using the seal.

### Solution to the Problem

In order to solve the above problem, according to a first aspect of the present invention, there is provided a seal for a rolling screw, the seal comprising: a circular ring part secured onto a nut of the rolling screw; and a lip part continuous inward from the circular ring part to be in sliding contact with a threaded shaft of the rolling screw, wherein the lip part extends inward in a radial direction from the circular ring part at a tilt angle with respect to a surface perpendicular to an axial direction of the threaded shaft, and has a part bending in a direction to make the tilt angle smaller at a partway of the lip part

According to a second aspect of the present invention, in the first aspect of the present invention, a length of a bending part from a bending point of the lip part to an edge of the lip part may fall within a range from equal to or more than 0.5 % to equal to or less than 30 % a diameter of a rolling element of the rolling screw to which the seal is attached.

According to a third aspect of the present invention, there is provided a seal for a rolling screw, the seal comprising: a circular ring part secured onto a nut of the rolling screw; and a lip part continuous inward from the circular ring part to be in sliding contact with a threaded shaft of the rolling screw, wherein the lip part includes: a tilting part formed continuously inward from the circular ring part and tilting with respect to a surface perpendicular to an axial direction of the threaded shaft; and a bending part continuous via a bending point on a far side of the tilting part from the circular ring part, and bending in a direction to make the tilt angle smaller.

According to a fourth aspect of the present invention, in the third aspect of the present invention, the bending part may be perpendicular to the axial direction of the threaded shaft

According to a fifth aspect of the present invention, in the third or fourth aspect of the present invention, a length in the radial direction of the bending part may fall within a range from equal to or more than 0.5 % to equal to or less than 30 % a diameter of a rolling element of the rolling screw to which the seal is attached.

According to a sixth aspect of the present invention, in any one of the first to fifth aspects of the present invention, the seal may be made of a soft elastic member.

According to a seventh aspect of the present invent.ion, in any one of the third to fifth aspects of the present invention, deflection stiffness in the axial direction of the bending part in the lip part may be made greater than deflection stiffness of the bending part in the lip part

According to an eighth aspect of the present invention, there is provided a rolling screw comprising the seal for the rolling screw according to any one of the first to seventh aspects of the present invention.

### Advantageous Effects of the Invention

According to the present invention, it is made possible to prevent the side face of the lip part from coming into contact with the land part of the threaded shaft, while maintaining advantages of the lip part made to tilt with respect to the surface perpendicular to the axial direction of the threaded shaft. It is possible to achieve improvements in the sealing performance with the edge of the lip part not being separated from the groove of the threaded shaft.

### Brief Description of the Drawings

FIG. 1 is a cross-sectional view illustrative of a threaded shaft in the axial direction according to a first embodiment of the present invention;
FIG. 2 is a cross-sectional view illustrative of the threaded shaft in the axial direction according to a second embodiment of the present invention;
FIG. 3 is a cross-sectional view illustrative of the threaded shaft in the axial direction t.o indicate an edge part length of FIG. 2;
FIG. 4 is a cross-sectional view illustrative of the threaded shaft in the axial direction according to a third embodiment of the present invention;
FIG. 5 is a cross-sectional view illustrative of the threaded shaft in the axial direction according to a fourth embodiment of the present invention;
FIG. 6 is a cross-sectional view illustrative of the threaded shaft in the axial direction according to a fifth embodiment of the present invention;
FIG. 7A and FIG. 7B each are a cross-sectional view illustrative of the threaded shaft in the axial direction according to a sixth embodiment of the present invention;
FIG. 8 is a cross-sectional view illustrative of the threaded shaft in the axial direction according to a seventh embodiment of the present invention;
FIG. 9A is an elevation view illustrative of the entire seal for the rolling screw;
FIG. 9B is a cross-sectional view illustrative of the entire seal for the rolling screw;
FIG. 10 is a cross-sectional view, in the axial direction illustrative of a state where the seal for the rolling screw is attached to a ball screw mechanism of circulation tube type;
FIG. 11 is a cross-sectional view illustrative of a reference example in which a protrusion is provided on the land end part side of the lip part;
FIG. 12 is a cross-sectional view illustrative of a wedge-shaped space defined by an arc-shaped surface of the edge of the lip bending part and the threaded shaft surface;
FIG.. 13 is a view illustrative of a conventional example, and is a view illustrative of the lip extending perpendicularly to the axial direction of the threaded shaft; and
FIG.. 14 is a view illustrative of an example described in Patent Document 1, and is a cross-sectional view, in the axial direction of the threaded shaft, illustrative of a situation where the lip part tilting with respect to the direction perpendicular to the axial direction is in contact with the land end part.

### Description of Embodiments

Hereinafter, embodiments of the present invention will be described with reference to the attached drawings.

The seal for the rolling screw according to the embodiments is for use in a rolling screw. The rolling screw has a mechanism of converting the rotational movement into the linear movement, and denotes a ball screw, a roller screw, and the like. In the rolling screw mechanism, a nut. (i. e., female thread member) having a threaded groove in the inner circumference thereof is in threaded engagement via a ball or roller with the threaded shaft having a threaded groove in the outer circumference thereof. Then, the rotation of the threaded shaft moves the nut in the axial direction. In contrast, in some rolling screws, the rotation of the nut advances or retreats the threaded shaft.

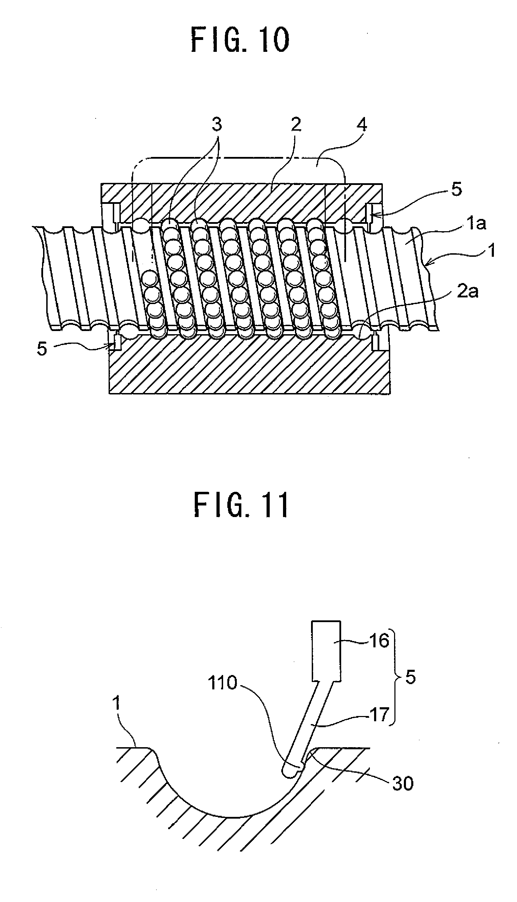

As an example of the above-described rolling screw, the entire configuration of the ball screw mechanism of circulation tube type will be described with reference to FIG. 10. In FIG. 10, a threaded shaft 1, only partially illustrated, is a shaft member having a threaded groove 1a having an arc-shaped cross section on the outer circumference. A nut 2 is a cylindrical member having a threaded groove 2a in the inner circumference to correspond to the threaded groove 1a of the threaded shaft 1. Although not illustrated, two through holes are formed to extend from the top face of the nut 2 to the threaded groove 2a. Both ends of a ball circulation tube 4 having a letter U shape, as indicated by a phantom line, are inserted and fit into the through holes, respectively.

The threaded shaft 1 inserted into the nut 2 is arranged such that the threaded groove 1a opposes the threaded groove 2a of the nut and plural balls 3 are rollably accommodated in the groove.

When one of the nut 2 and the threaded shaft 1 is relatively rotated, the other thereof advances or retreats in the axial direction with accompanying the movements of the balls 3 as described below. That is, the balls 3 rotate along the rolling passage formed between the threaded grooves 1a and 2a, and teach the end of the ball circulation tube 4. Then, the balls are guided by a tongue part, not illustrated, scooped up from the rolling passage to the tube and conveyed into the tube 4, and returned to the rolling passage through the tube from the opposite end, so as to repeat such a circulation.

A seal 5 for the rolling screw is provided at each of both ends of the nut 2 to prevent any foreign matter such as dusts or the like from entering the nut 2 from the outside.. The seal 5 for the rolling screw is attached to the nut by securing screws.

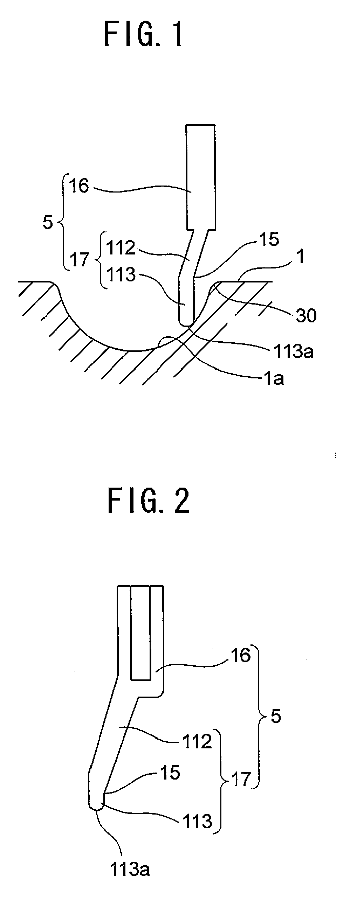

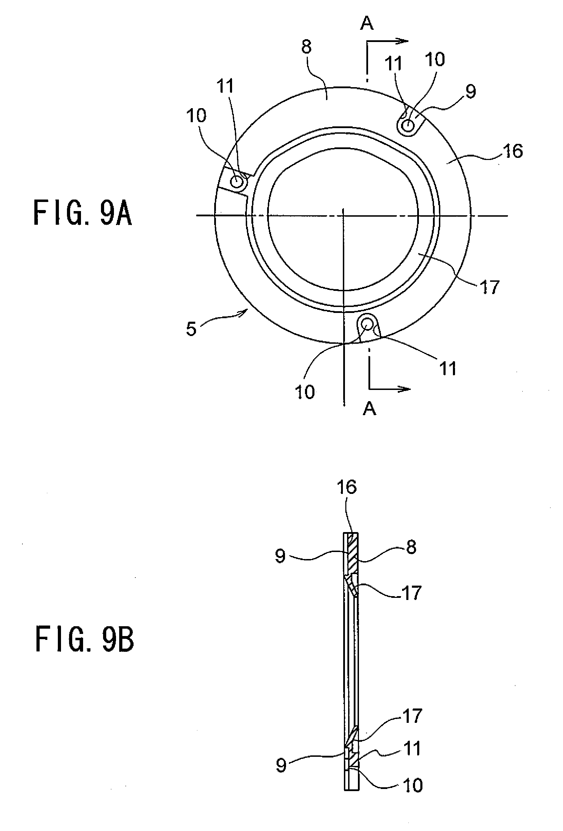

The seal 5 for the rolling screw has a shape as illustrated in FIG. 9. FIG. 9A is an elevation view illustrative of the entire seal for the rolling screw, and FIG. 9B is a cross-sectional view take along line A-A of FIG. 9A. In FIG. 9A and FIG. 9B, a lip part 17 has a shape to be described later in a third embodiment, as an example. However, the lip shape to be described with reference to FIG. 1 to FIG. 8 in a first embodiment to a seventh embodiment is applied to the seal 5 for the rolling screw.

The seal 5 for the rolling screw has a shape like a doughnut, as a whole, having a hole at the center to make the threaded shaft 1 penetrate therein, as illustrated in FIG. 9A and FIG. 9B. The seal 5 for the rolling screw is provided with: a circular ring part 16 fit at an end part of the nut 2 and secured onto the nut end face by securing screws; and the lip part 17 extending inward in the radial direction from the inner circumferential surface of the circular ring part 16 to be in sliding contact with the threaded shaft.

The circular ring part 16 is provided with: an elastic part 8 constituted of a soft elastic member such as rubber or elastomer; and a cored bar 9 constituted of a metal such as steel disposed on the nut side of the elastic part 8, and the elastic part 8 and the cored bar 9 are bonded together. The provision of the cored bar 9 makes it easy for the seal 5 for the rolling screw to maintain a fixed shape.

The cored bar 9 is provided with three screw openings 10 to make the securing screws penetrate therethrough to secure the cored bar onto the nut, and in correspondence with this, the elastic part 8 is provided with three notch parts 11.. In this manner, the cored bar 9 can be screw-secured to the nut directly without the intervention of the elastic part 8 between the screw head part and the nut end part, in securing the screws, thereby enabling stronger securing.

The lip part 17 is constituted of a soft elastic member such as rubber or elastomer, and is integrally formed with the elastic part 8 of the circular ring part 16. Such a soft elastic member is capable of exhibiting the stable sealing performance by elastic deformation, even if the pressing amount of the lip part 7 pressing the threaded shaft is changed by an external force or the like applied onto the nut.

The edge of the lip part 17 that is the inner circumference thereof has a shape similar to the cross section of the threaded shaft so as to be in sliding contact with the threaded groove and the land part of the threaded shaft by a certain pressing force without generating a space. Therefore, it is formed such that the part to be in sliding contact with the threaded groove is closer to the center point, whereas the part to be in sliding contact with the land part is further from the center point. The planar shape of the lip part 17 is changeable in various ways in accordance with the pitch, shape, or the like of the threaded groove formed in the threaded shaft.

The inner circumferential surface of the circular ring part 16 has a shape to correspond to that of the lip part 17. Accordingly, the length of the lip part 7 in the radial direction is same over the entire circumference. This enables sealing with a certain pressing force over the entire circumference.

The cross-sectional shape of the lip part 17 in the axial direction of the threaded shaft to be applied to the seal 5 for the rolling screw will now be described. It is to be noted that the cross-sectional shape may take any one of the cross-sectional shapes in the embodiments, to be described below, over the entire circumference. However, in order to achieve a purpose of preventing an unintended contact with the threaded shaft, only the part to be in contact with the threaded groove of the threaded shaft may have the cross-sectional shape to be described below. In such a case, the other parts may have a lip shape having a certain tilt angle over the entire length in the radial direction, or may have another shape.

### (First Embodiment)

FIG. 1 illustrates the seal 5 for the rolling screw according to the first embodiment of the preset invention. That is, the seal 5 for the rolling screw includes the circular ring part 16 and the lip part 17 arranged on inner side of the circular ring part 16. The lip part 17 is provided with: a tilting part 112 continuous inward in the radial direction of the circular ring part 16; and a bending part 113 bending from the tilting part 112 and further extending inward in the radial direction. An edge 113a of the bending part 113 has an arc-shaped cross section. With such an arc shape, it is possible to lower the influence of the contact angle of the threaded shaft surface to be in sliding contact, onto the sealing performance. A bending point 15 forms a boundary between the tilting part 112 and the bending part 113.

The tilting part 112 has a tilt angle with respect to the surface perpendicular to the axial direction of the threaded shaft 1, and the bending part 113 bends at the bending point. 15 and extends in a direction that makes the tilt angle smaller. Preferably, the tilt angle is made zero to be perpendicular to the axial direction of the threaded shaft 1. With such a configuration, the lip part 17 avoids a land end part 30 of the threaded shaft 1 and brings the edge 113a into contact with the inside of the threaded groove 1a. Therefore, it is possible to prevent the sealing performance degradation caused by an unintended contact as illustrated in FIG. 14.

In addition, the provision of the tilting part 112 makes smaller the stiffness against the force directing outward in the radial direction (upward in FIG. 1) than the case where the whole lip part 17 is made to extend perpendicularly to the axial direction. Accordingly, an external force is exerted onto the rolling screw, and even if the pressing amount of the lip part 17 pressing the threaded shaft 1 is not uniform, the lip part 17 will be able to conform to it. It is thus possible to prevent a rise in the seal torque and exhibit a stable sealing performance.

Further, the provision of the tilting part 112 makes higher the stiffness in the case where the threaded shaft is threaded into from the edge side of the tilting part 112 (left side of FIG. 1) than that in the case where the threaded shaft is threaded into from the root side of the tilting part 112 (right side of FIG. 1). This increases the force of pressing the bending part 113 of the lip part 17 against the threaded shaft 1 more in the former case than in the latter case, resulting in the higher sealing performance. The directional property of the seal as described above enables the efficient seal. For example, when dusts entering from the outside are intended to prevent, the bending part of the lip part 17 is to be located on the outer side of the nut.. Additionally, when grease leakage from the inside of the nut is intended to prevent, the bending part 113 of the lip part 17 is to be located on the inner side of the nut. With these configurations, the purpose of the seal is achievable while suppressing the seal torque.

Further, as a method of preventing the tilting lip part 17 from an unintended contact with the land end part 30 of the threaded shaft 1, the method illustrated in FIG. 11 is also conceivable. That is, the shape of the lip part 17 is made to have a special one, such as a protrusion 110 provided on the land end part side of the lip part 17. However, if the above measure is adopted, there will be more restrictions in design of the lip part 17 and the freedom of design will be reduced. Since the shape of the lip part 17 is a part that largely influences the properties such as dust resistance, sealing performance, durability and the like, it cannot be said that the provision of the protrusion 110 as illustrated in FIG. 11 is a desirable shape in light of the design freedom.. The restrictions on the shape of the lip part 17 are eliminated by including the tilting part 112 and the bending part 113 where the lip part 17 bends at a partway therebetween, according to the present invention. As a result, it is made possible to adopt various shapes of the bending part in accordance with the application, as will be described later.

Furthermore, when the whole lip part 20 is made to tilt as illustrated in FIG. 14, the interference easily occurs at the land part 30 as the tilt angle is larger. Therefore, this poses a disadvantage of placing a restriction in design of the tilt angle. In contrast, the lip part 17 has the tilting part 112 and the bending part 113 as described in the first embodiment of FIG. 1, thereby increasing the freedom in design of the tilt angle.

### (Second Embodiment)

FIG. 2 illustrates the seal 5 for the rolling screw according to the second embodiment of the present invention. In this embodiment, the lip part 17 is provided with: the tilting part 112 extending inward from the circular ring part 16 in the radial direction of the circular ring part. 16; and the bending part 113 bending at the bending point 15 and further extending inward wherefrom in the radial direction. The edge 113a of the bending part 113 has an arc-shaped cross section.

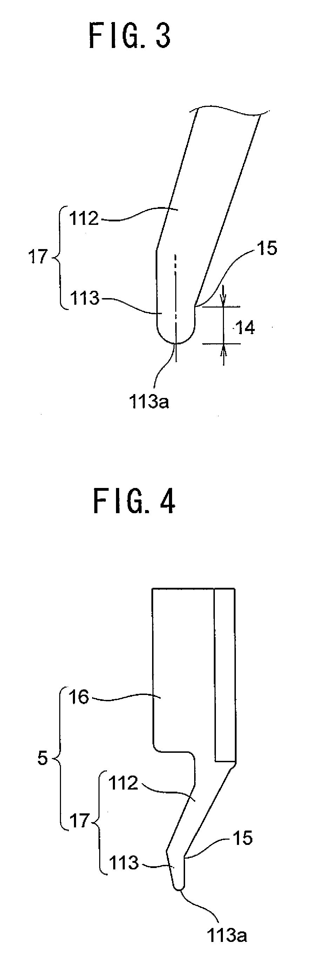

The second embodiment is different from the first embodiment in that the length of the bending part 113 is shorter than that of the tilting part 112 and the length of the bending part 113 is shorter than the diameter of the rolling element for use in the rolling screw. Herein, FIG. 3 illustrates the definition of "the bending part length" or "the length of the bending part", and in FIG. 3, reference numeral 14 indicates the afore-mentioned length. The length 14 (the bending part length or the length of the bending part) is defined as a length, from the bending point 15 of the lip part 17 to the edge 113a, in a direction perpendicular to the axial direction of the threaded shaft. In addition, "the bending point 15" described herein is defined as a point of bending to form a valley on one side surface of the two side surfaces bending on the lip part 17. Therefore, the part from the bending point 15 to the edge 113a is the bending part 113 according to the present invention.

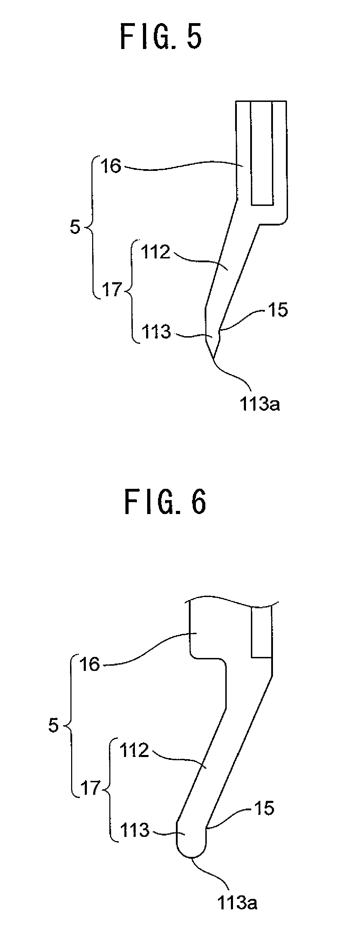

The bending part length 14 preferably falls within a range from 0.5 % or more to 30 % or less the diameter of the rolling element of the rolling screw. If it is lower than this lower limit, such a short length of the length 14 will make it difficult to avoid an unintended contact with the land end part of the threaded shaft. Conversely, if it is higher than this upper limit, a deflection similar to that of the lip part 90 that does not have a tilt angle as illustrated in FIG. 13 will be generated when the force in the axial direction of the threaded shaft is exerted onto the lip part 17 by the friction with the threaded shaft surface. This will make it difficult t.o exhibit the advantage of the tilting part 112. Therefore, the bending part length 14 is desirably as short as possible in the range where an unintended contact with the land end part can be avoided. It is needless to say that the cross-sectional shape of the edge 113a may not necessarily have an arc shape, as illustrated in examples of FIG. 5 and FIG. 6 to be described later.

### (Third Embodiment)

FIG. 4 illustrates the seal 5 for the rolling screw according to the third embodiment of the present invention. In this embodiment, the lip part 17 is provided with: the tilting part 112 extending inward in the radial direction from the circular ring part 16; and the bending part 113 extending from the tilting part 112 in the same direction. The edge 113a of the bending part 113 has an arc-shaped cross section..

The third embodiment is different from the first and second embodiments in that the bending part 113 is made thinner as it is closer to the edge 113a and the arc-shaped diameter of the edge 113a is made smaller. When the edge 113a has an arc shape, there is an advantage of reducing the influence of the contact angle of the threaded shaft surface to be in sliding contact with, onto the sealing performance.. In this case, however, when the sliding contact portion is focused on, a wedge-shaped space 122 is defined by the arc-shaped surface 120 of the edge 113a and the threaded shaft surface 121, as illustrated in FIG. 12. The wedge-shaped space 122 easily makes foreign matters stuck therein. Then, before long, such stuck foreign matters could push the seal and then pass by the seal. Therefore, according to the third embodiment, the wedge-shaped space 122 in FIG. 12 is made smaller by reducing the diameter of the arc-shaped edge, so that a foreign matter hardly gets stuck.

### (Fourth Embodiment)

FIG. 5 illustrates the seal 5 for the rolling screw according to the fourth embodiment of the present invention. That is, the lip part 17 of the seal 5 is provided with: the tilting part 112 extending from the circular ring part 16; and the bending part 113 bending at the tilting part 112 and further expending.

The fourth embodiment is different from the first to third embodiments in that the cross-sectional shape of the bending part 113 is made sharp so that the edge 113a is in line contact with the face of the threaded groove. This enables the prevention of any foreign matter entering the space between the lip edge portion and the threaded shaft surface and then passing by the seal, as compared to the case where the edge has an arc shape. It is therefore possible to exhibit a higher sealing performance.

### (Fifth Embodiment)

FIG. 6 illustrates the seal 5 for the rolling screw according to the fifth embodiment of the present invention. That is, the lip part 17 of the seal 5 is provided with: the tilting part 112 extending from the circular ring part 16; and the bending part 113 further extending from the tilting part 112.

The fifth embodiment is different from the first to fourth embodiments in that the bending part 113 has a polygon-shaped cross section. This prevents any foreign matter from entering the wedge-shaped space between the lip edge portion and the threaded shaft surface and then passing by the seal, as compared to the case where it has an arc shape. Moreover, it is possible to lower the influence of the contact angle of the threaded shaft surface to be in sliding contact with, onto the sealing performance, as compared to the case where the edge 113a is made sharp.

### (Sixth Embodiment)

Herein, if the bending part 113 is arranged on the inner side in the radial direction of the tilting part 112 in the lip part 17 of the seal 5, the following situation might occur. As already described with reference to FIG. 13, the deflecting direction of the bending part 113 cannot be controlled and tilting might be meaningless, as is the case with the seal made of a flat plate. Therefore, when the length of the bending part 113 is shorter than that of the tilting part 11 or the diameter of the rolling element for use herein as illustrated in FIG. 2 and FIG. 3, and the thickness of the bending part 113 is identical to that of the tilting part 112, the deflection stiffness of the bending part 113 is greater than that of the tilting part 112. Accordingly, the deflection at the bending part 113 is small enough to be ignored.

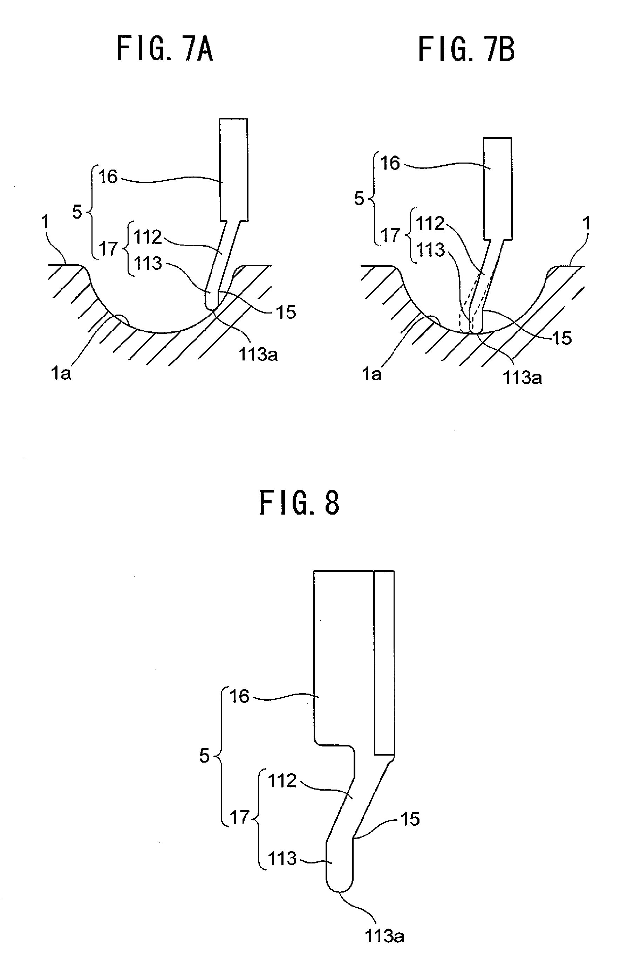

FIG. 7A and FIG. 7B illustrate the sixth embodiment as described above. In this embodiment, the same advantageous effects can be expected as those in the case where the lip part 17 is composed of the tilting part 112 only, and the advantages of forming the tilting part 112 are maintained. Therefore, it is desirable that the stiffness of the bending part 113 is to be at least greater than that of the tilting part 112.

### (Seventh Embodiment)

FIG. 8 illustrates the seventh embodiment according to the present invention. In this embodiment, as a means for increasing the deflection stiffness of the bending part 113 more than that of the tilting part 112, the thickness of the bending part 113 is made greater than that of the tilting part 112 made of an identical material to the bending part 113, instead of the embodiment of FIG. 7A and FIG. 7B. In addition, as the means for increasing the deflection stiffness of the bending part 113 more than that of the tilting part 112, it is needless to say that another known means for making the stiffness of the member great can be adopted, that is, the material of the bending part 113 having great stiffness can be adopted or another member can be added to the bending part 113.

As described heretofore, according to the present invention, it is possible to provide the seal for the rolling screw capable of preventing an unintended contact with the threaded shaft, while maintaining the advantage of the lip tilting with respect to the direction perpendicular to the axial direction of the threaded shaft, and the rolling screw using the seal.

### Reference Signs List

- 1: threaded shaft
- 1a: threaded groove (threaded shaft)
- 2: nut
- 2a: threaded groove (nut)
- 3a: ball
- 4: circulation tube
- 5: seal for rolling screw
- 8: elastic part
- 9: cored bar
- 10: screw opening
- 11: notch part
- 14: bending part length
- 15: bending point
- 16: circular ring part
- 17: lip part
- 90: lip part
- 91: threaded shaft
- 110: protrusion
- 112: tilting part
- 113: bending part
- 113a: edge
- 120: arc-shaped surface
- 121: threaded shaft surface
- 122: wedge-shaped space

## Claims

1. A seal for a rolling screw, the seal comprising:
a circular ring part secured onto a nut of the rolling screw; and
a lip part continuous inward from the circular ring part to be in sliding contact with a threaded shaft of the rolling screw,
wherein the lip part extends inward in a radial direction from the circular ring part at a tilt angle wit.h respect to a surface perpendicular to an axial direction of the threaded shaft, and has a part bending in a direction to make the tilt angle smaller at a partway of the lip part.

2. The seal for the rolling screw according to claim 1, wherein a length of a bending part from a bending point of the lip part to an edge of the lip part falls within a range from equal to or more than 0.5 % to equal to or less than 30 % a diameter of a rolling element of the rolling screw to which the seal is attached.

3. A seal for a rolling screw, the seal comprising:
a circular ring part secured onto a nut of the rolling screw; and
a lip part continuous inward from the circular ring part to be in sliding contact with a threaded shaft of the rolling screw,
wherein the lip part includes:
a tilting part formed continuously inward from the circular ring part and tilting with respect to a surface perpendicular to an axial direction of the threaded shaft; and
a bending part continuous via a bending point on a far side of the tilting part from the circular ring part, and bending in a direction to make the tilt angle smaller.

4. The seal for the rolling screw according to claim 3, wherein the bending part is perpendicular to the axial direction of the threaded shaft.

5. The seal for the rolling screw according to claim 3 or claim 4, wherein a length in the radial direction of the bending part falls within a range from equal to or more than 0.5 % to equal to or less than 30 % a diameter of a rolling element of the rolling screw to which the seal is attached.

6. The seal for the rolling screw according to any one of claims 1 to 5, wherein the seal is made of a soft elastic member.

7. The seal for the rolling screw according to any one of claims 3 to 5, wherein deflection stiffness in the axial direction of the bending part in the lip part is made greater than deflection stiffness of the bending part in the lip part.

8. A rolling screw comprising the seal for the rolling screw according to any one of claims 1 to 7.
